# EUROPÄISCHE PATENTSCHRIFT

(11) **EP 0 528 125 B1**
(45) Veröffentlichungstag und Bekanntmachung des Hinweises auf die Patenterteilung: **07.09.1994**
(21) Anmeldenummer: 92109367.0
(22) Anmeldetag: 03.06.1992
(51) Int. Cl.: B29C 61/06, H02G 15/18

(54) **Wärmerückstellbare Werkstoffbahn**
Heat-recoverable sheet
Bande thermorétractable

(30) Priorität: 09.08.1991 DE 4126355
(43) Veröffentlichungstag der Anmeldung: 24.02.1993
(73) Patentinhaber: Stewing Nachrichtentechnik GmbH & Co. KG Berlin, 13599 Berlin (DE)
(72) Erfinder: Becker, Friedrich, W-5800 Hagen 7 (DE); Nicolai, Norbert, Dr., W-4270 Dorsten 1 (DE); Stupp, Winfried, W-5800 Hagen 1 (DE)
(74) Vertreter: Honke, Manfred, Dr.-Ing.

(56) Entgegenhaltungen:
- EP-A- 0 330 873
- EP-A- 0 364 924
- DE-A- 3 929 012
- GB-A- 1 088 572

## Beschreibung

Die Erfindung betrifft eine wärmerückstellbare Werkstoffbahn zum Herstellen von auf Gegenstände, insbesondere Kabelverbindungen und -abzweigungen, aufschrumpfbaren Umhüllungen, bestehend aus zumindest einer polymeren Deckschicht, einer wärmestabilen Netzschicht und einer wärmeschrumpffähigen Rückstellschicht.

Es ist ein Schlauchgewebe zum Schutz bzw. zur Isolierung langgestreckter Gegenstände bekannt, welches in Radialrichtung wärmeschrumpffähig und in Axialrichtung wärmebeständig ist sowie eine wärmehärtende Beschichtung aufweist, um die Steifigkeit des im Zuge eines Schrumpfvorganges entstehenden Produktes zu erhöhen. Die Wärmeschrumpffähigkeit in Radialrichtung wird mittels wärmeschrumpffähiger Kunststofffäden erreicht, die Wärmebeständigkeit in Axialrichtung wird mittels nicht wärmeschrumpffähiger Kunststoffäden erzielt (US-PS 36 69 157).

Ferner kennt man ein wärmeschrumpffähiges Produkt, welches im wesentlichen aus einem wärmeschrumpffähigen Gewebe und einer polymeren Beschichtung besteht (vgl. EP-OS 0 243 985).

Der Erfindung liegt die Aufgabe zugrunde, eine wärmerückstellbare Werkstoffbahn der eingangs beschriebenen Ausführungsform zu schaffen, die sich durch hohe Reißfestigkeit im schmelzflüssigen und festen Zustand sowie hohe Gewölbestabilität im festen Zustand auszeichnet und sich einfach und preiswert herstellen läßt.

Diese Aufgabe löst die Erfindung bei einer gattungsgemäßen Werkstoffbahn dadurch, daß die Rückstellschicht aus einer vernetzten, verstreckten Kunststoffbahn besteht, welche in Reckrichtung bzw. Schrumpfrichtung mittels die Kunststoffbahn vollständig durchdringender Teilungsschnitte und/oder nicht vollständig durchdringender Oberflächenschnitte unter Bildung von Schrumpfbändern vorgegebener Breite unterteilt ist. - Diese Maßnahmen der Erfindung haben zur Folge, daß überraschenderweise eine hohe Reißfestigkeit im festen Zustand und selbst im schmelzflüssigen Zustand erreicht wird, und zwar in Schrumpfrichtung aufgrund der erfindungsgemäßen Ausbildung der Rückstellschicht und orthogonal zur Schrumpfrichtung aufgrund der wärmestabilen Netzschicht. Außerdem ist im festen Zustand eine hohe Gewölbestabilität gewährleistet.

Weitere erfindungswesentliche Merkmale sind im folgenden aufgeführt. So sieht die Erfindung vor, daß die vernetzte, verstreckte Kunststoffbahn bei 200 °C eine maximale Schrumpfkraft von 200 p pro cm bis 400 p pro cm Bahnbreite, vorzugsweise 1200 p pro cm bis 1600 p pro cm Bahnbreite aufweist. Die Teilungsschnitte und/oder Oberflächenschnitte können einen Abstand von 1 mm bis 20 mm, vorzugsweise 1 mm bis 5 mm aufweisen. Vorzugsweise besitzt die vernetzte, verstreckte Kunststoffbahn schnittfreie Seitenränder vorgegebener Breite. Sie kann zwischen zwei Netzschichten oder zwischen einer Netzschicht und zwei Deckschichten bzw. zwei Netzschichten und zwei Deckschichten eingebettet sein. - Im ganzen weist die wärmerückstellbare Werkstoffbahn zweckmäßigerweise senkrecht zur Schrumpfrichtung verlaufende Verschlußschienen bzw. Verschlußwülste auf. Die Teilungsschnitte und/oder Oberflächenschnitte verlaufen erfindungsgemäß senkrecht zu den Verschlußschienen oder in einem vorgegebenen Winkel bis zu 45°, vorzugsweise in einem Winkel von 80° bis 85°. In diesem Zusammenhang besteht auch die Möglichkeit, daß Teilungsschnitte und/oder Oberflächenschnitte in einem vorgegebenen Winkel, vorzugsweise 5° bis 20°, zueinander verlaufen. Die Teilungsschnitte bzw. Oberflächenschnitte können über definierte Bereiche unterbrochen sein, wobei vorzugsweise alternierend geschnittene und nicht geschnittene Bereiche abwechseln. Weiter sieht die Erfindung vor, daß die Teilungsschnitte und/oder Oberflächenschnitte in einem Abstand von 10 mm bis 30 mm vor den Verschlußschienen enden oder bis zu den Verschlußschienen durchgeführt sind, ggf. teilweise vor den Verschlußschienen enden und teilweise bis zu den Verschlußschienen durchgeführt sind. Erfindungsgemäß ist die wärmestabile Netzschicht von einem Netz, Gewebe, Gewirke, Gitter o. dgl. aus Metall, Kunststoff oder Glas gebildet und in Schrumpfrichtung verschiebefest angeordnet. Es besteht aber auch die Möglichkeit, daß das Netz, Gewebe, Gewirke, Gitter o. dgl. aus einfach oder mehrfach verzwirnten Garnen aufgebaut ist. Außerdem kann das Netz, Gewebe, Gewirke, Gitter o. dgl. Haftvermittlerfäden besitzen oder mit einem flüssigen Haftvermittler getränkt sein, um einen besonders engen Verbund mit der Rückstellschicht bzw. Kunststoffbahn und der zugeordneten Deckschicht zu erreichen. Das gelingt auch dann, wenn die Netzschicht durch Kleben oder Nähen und/oder Ketteln wärmefest mit der vernetzten, verstreckten Kunststoffbahn und ggf. die Längsfäden und Querfäden der Netzschicht untereinander verbunden sind. Die sich kreuzenden Längsfäden und Querfäden der Netzschicht können parallel bzw. senkrecht zu den Verschlußschienen oder in einem vorgegebenen Winkel bis zu 45° zu den Verschlußschienen angeordnet sein. Zweckmäßigerweise sind die Längsfäden in einem Abstand von 1 mm bis 40 mm, vorzugsweise 2 mm bis 10 mm, und die Querfäden in einem Abstand von 0,5 mm bis 20 mm, vorzugsweise 1 mm bis 3 mm, angeordnet. Endlich kann die obere und/oder untere Deckschicht - bevorzugt die untere Deckschicht - eine Sperrschicht aus Aluminium als gleichsam Dampfsperre aufweisen.

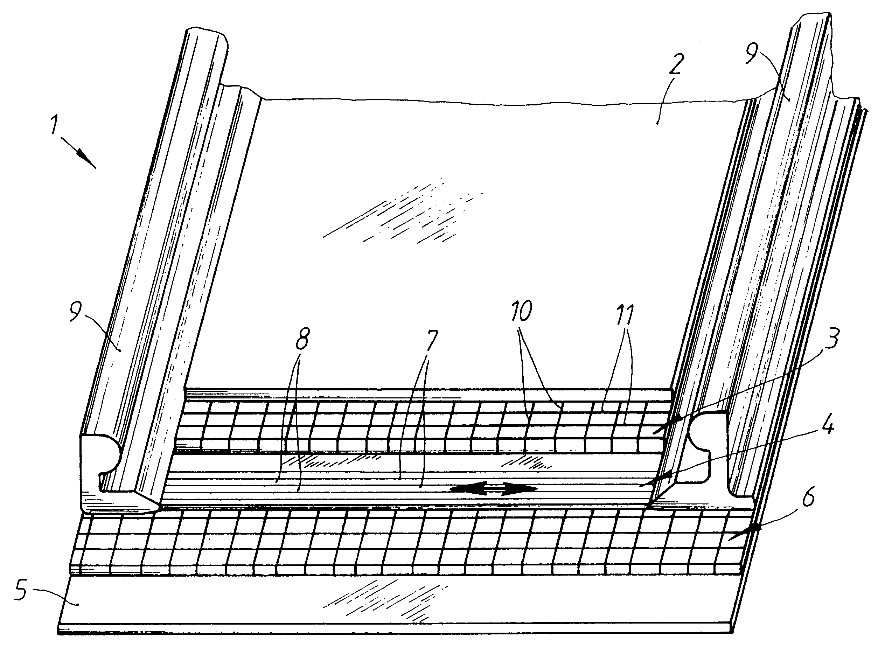

Im folgenden wird die Erfindung anhand einer lediglich ein Ausführungsbeispiel darstellenden Zeichnung näher erläutert: die einzige Figur zeigt eine erfindungsgemäße wärmerückstellbare Werkstoffbahn 1 in perspektivischer Darstellung und teilweise geschnitten bzw. mit teilweise freigelegten Schichten. Diese Werkstoffbahn dient zum Herstellen von Kabelmuffen, Gehäusen, Manschetten o. dgl. auf Gegenstände, insbesondere Kabelverbindungen und -abzweigungen, aufschrumpfbaren Umhüllungen, und besteht in ihrem grundsätzlichen Aufbau aus zumindest einer polymeren Deckschicht 2, einer wärmestabilen Netzschicht 3 und einer wärmeschrumpffähigen Rückstellschicht 4. Nach dem Ausführungsbeispiel sind eine obere und untere polymere Deckschicht 2,5 sowie eine obere und untere wärmestabile Netzschicht 3,6 für die eingebettete schrumpffähige Rückstellschicht 4 vorgesehen. Die Rückstellschicht besteht aus einer vernetzten, verstreckten Kunststoffbahn 4, die in Reckrichtung bzw. Schrumpfrichtung, welche durch einen Doppelpfeil angegeben ist, mittels die Kunststoffbahn durchdringender Teilungsschnitte 7 unter Bildung von Schrumpfbändern 8 vorgegebener Breite unterteilt ist. Die Kunststoffbahn 4 weist bei 200 °C eine maximale Schrumpfkraft von 200 p pro cm bis 400 p pro Bahnbreite, vorzugsweise 1200 p pro cm bis 1600 p pro cm Bahnbreite auf. Die Teilungsschnitte 7 können einen Abstand von 1 mm bis 20 mm, vorzugsweise 1 mm bis 5 mm aufweisen, so daß echte Schrumpfbänder 8 zwischen diesen Teilungsschnitten 7 entstehen. Außerdem weist die Kunststoffbahn 4 schnittfreie Seitenränder vorgegebener Breite und senkrecht zur Schrumpfrichtung verlaufende Verschlußschienen 9 bzw. Verschlußwülste auf. Die Teilungsschnitt 7 sind nach dem Ausführungsbeispiel senkrecht zu den Verschlußschienen 9 angeordnet, können aber auch in einem Winkel bis zu 45°, vorzugsweise in einem Winkel von 80° bis 85° verlaufen und im übrigen in einem vorgegebenen Winkel, vorzugsweise 5° bis 20°, zueinander bzw. gegeneinander verlaufen. Letzteres ist nicht dargestellt. Außerdem sind nach dem Ausführungsbeispiel die Teilungsschnitte 7 bis zu den Verschlußschienen 9 durchgeführt, sie können aber auch in einem vorgegebenen Abstand vor den Verschlußschienen enden oder teilweise vor den Verschlußschienen enden und teilweise bis zu den Verschlußschienen durchgeführt sein.

Bei den wärmestabilen Netzschichten 3, 6 handelt es sich bei der dargestellten Ausführungsform um ein Gewebe oder Gitter, welches in Schrumpfrichtung verschiebefest angeordnet ist. Das Gewebe oder Gitter 3, 6 kann aus Metall, Kunststoff oder Glas bestehen. Es besteht aber auch die Möglichkeit, das Gewebe oder Gitter 3,6 aus einfach oder mehrfach verzwirnten Garnen aufzubauen. Darüber hinaus ist das Gewebe oder Gitter 3,6 mit einem flüssigen Haftvermittler getränkt. Die sich kreuzenden Längsfäden 10 und Querfäden 11 des Gewebes oder Gitters 3,6 verlaufen parallel bzw. senkrecht zu den Verschlußschienen 9, obwohl auch insoweit eine Anordnung in einem vorgegebenen Winkel bis zu 45° zu den Verschlußschienen möglich ist. Nach dem Ausführungsbeispiel sind die Längsfäden 10 und Querfäden 11 in einem Abstand von jeweils mehreren Millimetern zueinander angeordnet. Bevorzugt die untere Deckschicht 5 kann eine Sperrschicht aus Aluminium bzw. Aluminiumfolie aufweisen, was nicht gezeigt ist.

Im Rahmen der Erfindung kann der Abstand der Teilungsschnitte 7 über die Länge der Werkstoffbahn 1, bei der es sich um eine Manschette handeln kann, variieren. Die Aluminiumfolie kann ebenfalls in Schrumpfrichtung der Werkstoffbahn 1 geschnitten sein. Damit entfällt ihre Wirkung als Dampfsperre, jedoch bleibt ihre Wirkung als Wärmereflektor erhalten. - Die Deckschicht 2 zeigt ein thixotropes Verhalten, so daß die Deckschicht bzw. Deckschichten 2 sich im Schrumpfbereich leicht verformen, ohne jedoch abzufließen.

## Patentansprüche

1. Wärmerückstellbare Werkstoffbahn zum Herstellen von auf Gegenstände, insbesondere Kabelverbindungen und -abzweigungen, aufschrumpfbaren Umhüllungen, bestehend aus zumindest einer polymeren Deckschicht, einer wärmestabilen Netzschicht und einer wärmeschrumpffähigen Rückstellschicht, **dadurch gekennzeichnet,** daß die Rückstellschicht aus einer vernetzten, verstreckten Kunststoffbahn (4) besteht, welche in Schrumpfrichtung mittels die Kunststoffbahn durchdringender Teilungsschnitte (7) und/oder nicht durchdringender Oberflächenschnitte unter Bildung von Schrumpfbändern (8) vorgegebener Breite unterteilt ist.

2. Werkstoffbahn nach Anspruch 1, dadurch gekennzeichnet, daß die vernetzte, verstreckte Kunststoffbahn (4) bei 200 °C eine maximale Schrumpfkraft von 200 p pro cm bis 400 p pro cm Bahnbreite, vorzugsweise 1200 p pro cm bis 1600 p pro cm Bahnbreite aufweist.

3. Werkstoffbahn nach Anspruch 1 oder 2, dadurch gekennzeichnet, daß die Teilungsschnitte (7) und/oder Oberflächenschnitte einen Abstand von 1 mm bis 20 mm, vorzugsweise 1 mm bis 5 mm, aufweisen.

4. Werkstoffbahn nach einem der Ansprüche 1 bis 3, dadurch gekennzeichnet, daß die vernetzte, verstreckte Kunststoffbahn (4) schnittfreie Seitenränder vorgegebener Breite aufweist.

5. Werkstoffbahn nach einem der Ansprüche 1 bis 4, dadurch gekennzeichnet, daß die vernetzte, verstreckte Kunststoffbahn (4) zwischen zwei Netzschichten (3,6) eingebettet ist.

6. Werkstoffbahn nach einem der Ansprüche 1 bis 4, dadurch gekennzeichnet, daß die vernetzte, verstreckte Kunststoffbahn (4) zwischen einer Netzschicht (3) und zwei Deckschichten (2,5) oder zwei Netzschichten (3,6) und zwei Deckschichten (2,5) eingebettet ist.

7. Werkstoffbahn nach einem der Ansprüche 1 bis 6, dadurch gekennzeichnet, daß sie beidseitig senkrecht zur Schrumpfrichtung verlaufenden Verschlußschienen (9) bzw. Verschlußwülste aufweist.

8. Werkstoffbahn nach einem der Ansprüche 1 bis 7, dadurch gekennzeichnet, daß die Teilungsschnitte (7) und/oder Oberflächenschnitte senkrecht zu den Verschlußschienen (9) oder in einem vorgegebenen Winkel bis zu 45°, vorzugsweise in einem Winkel von 80° bis 85° verlaufen.

9. Werkstoffbahn nach einem der Ansprüche 1 bis 8, dadurch gekennzeichnet, daß die Teilungsschnitte (7) und/oder Oberflächenschnitte in einem vorgegebenen Winkel, vorzugsweise 5° bis 20°-Winkel zueinander verlaufen.

10. Werkstoffbahn nach einem der Ansprüche 1 bis 9, dadurch gekennzeichnet, daß die Teilungsschnitte (7) und/oder Oberflächenschnitte in einem Abstand von 10 mm bis 30 mm vor den Verschlußschienen (9) enden oder bis zu den Verschlußschienen durchgeführt sind, ggf. teilweise vor den Verschlußschienen (9) enden und teilweise bis zu den Verschlußschienen (9) durchgeführt sind.

11. Werkstoffbahn nach einem der Ansprüche 1 bis 10, dadurch gekennzeichnet, daß die wärmestabile Netzschicht (3 bzw. 6) von einem Netz, Gewebe, Gewirke o. dgl. aus Metall, Kunststoff oder Glas gebildet und in Schrumpfrichtung verschiebefest angeordnet ist.

12. Werkstoffbahn nach einem der Ansprüche 1 bis 11, dadurch gekennzeichnet, daß das Netz, Gewebe, Gewirke, Gitter o. dgl. aus einfach oder mehrfach verzwirnten Garnen aufgebaut ist.

13. Werkstoffbahn nach einem der Ansprüche 1 bis 12, dadurch gekennzeichnet, daß das Netz, Gewebe, Gewirke, Gitter o. dgl. Haftvermittlerfäden aufweist oder mit einem flüssigen Haftvermittler getränkt ist.

14. Werkstoffbahn nach einem der Ansprüche 1 bis 13, dadurch gekennzeichnet, daß die Netzschicht (3 bzw. 6) durch Kleben und/oder Nähen und/oder Ketteln wärmefest mit der vernetzten, verstreckten Kunststoffbahn (4) und ggf. die Längsfäden (10) und Querfäden (11) der Netzschicht (3 bzw. 6) untereinander verbunden sind.

15. Werkstoffbahn nach einem der Ansprüche 1 bis 14, dadurch gekennzeichnet, daß die sich kreuzenden Längsfäden (10) und Querfäden (11) parallel bzw. senkrecht zu den Verschlußschienen oder in einem vorgegebenen Winkel bis zu 45° zu den Verschlußschienen (9) angeordnet sind.

16. Werkstoffbahn nach einem der Ansprüche 1 bis 15, dadurch gekennzeichnet, daß die Längsfäden (10) in einem Abstand von 1 mm bis 40 mm, vorzugsweise 2 mm bis 10 mm, und die Querfäden (11) in einem Abstand von 0,5 mm bis 20 mm, vorzugsweise 1 mm bis 3 mm, angeordnet sind.

17. Werkstoffbahn nach einem der Ansprüche 1 bis 16, dadurch gekennzeichnet, daß die obere und/oder untere Deckschicht eine Sperrschicht aus Aluminium aufweist.

## Claims

1. A thermally resettable length of material for the manufacture of sheaths which can be shrunk on to articles, particularly cable connections and junctions, consisting of at least one polymeric outer layer, a thermally stable network layer and a heat-shrinkable resetting layer, characterised in that the resetting layer consists of a cross-linked, stretched plastic strip (4) which is subdivided in the direction of shrinkage by means of parting cuts (7) which penetrate the plastic strip and/or by non-penetrating surface cuts with the formation of shrinkage strips (8) of predetermined width.

2. A length of material according to claim 1, characterised in that the cross-linked, stretched plastic strip (4) has a maximum shrinkage force at 200°C of 200 p per cm to 400 p per cm of strip width, preferably 1200 p per cm to 1600 p per cm of strip width.

3. A length of material according to claim 1 or 2, characterised in that the parting cuts (7) and/or surface cuts have a spacing of 1 mm to 20 mm, preferably 1 mm to 5 mm.

4. A length of material according to any one of claims 1 to 3, characterised in that the cross-linked, stretched plastic strip (4) has side edges without cuts and of predetermined width.

5. A length of material according to any one of claims 1 to 4, characterised in that the cross-linked, stretched plastic strip (4) is embedded between two network layers (3, 6).

6. A length of material according to any one of claims 1 to 4, characterised in that the cross-linked, stretched plastic strip (4) is embedded between a network layer (3) and two outer layers (2, 5) or between two network layers (3, 6) and two outer layers (2, 5).

7. A length of material according to any one of claims 1 to 6, characterised in that it comprises sealing bars (9) or sealing beads on both sides perpendicular to the direction of shrinkage.

8. A length of material according to any one of claims 1 to 7, characterised in that the parting cuts (7) and/or surface cuts extend perpendicularly to the sealing bars (9) or at a predetermined angle up to 45°, preferably at an angle of 80° to 85°.

9. A length of material according to any one of claims 1 to 8, characterised in that the parting cuts (7) and/or surface cuts extend at a predetermined angle to each other, preferably at an angle of 5° to 20°.

10. A length of material according to any one of claims 1 to 9, characterised in that the parting cuts (7) and/or surface cuts terminate at a distance of 10 mm to 30 mm in front of the sealing bars (9) or are effected as far as the sealing bars, or optionally partially terminate in front of the sealing bars (9) and are partially effected as far as the sealing bars (9).

11. A length of material according to any one of claims 1 to 10, characterised in that the thermally stable network layer (3; 6) is formed from a network, woven fabric, knitted fabric or the like made of metal, plastic or glass, and is disposed so that it is resistant to displacement in the direction of shrinkage.

12. A length of material according to any one of claims 1 to 11, characterised in that the network, woven fabric, knitted fabric, grid or the like is built up from singly- or multiply-twisted threads.

13. A length of material according to any one of claims 1 to 12, characterised in that the network, woven fabric, knitted fabric, grid or the like comprises bonding agent threads or is impregnated with a liquid bonding agent.

14. A length of material according to any one of claims 1 to 13, characterised in that the network layer (3; 6) is attached in a thermally resistant manner to the cross-linked, stretched plastic strip (4) by adhesive bonding and/or sewing and/or linking, and optionally the longitudinal threads (10) and transverse threads (11) of the network layer (3; 6) are attached to each other.

15. A length of material according to any one of claims 1 to 14, characterised in that the intersecting longitudinal threads (10) and transverse threads (11) are disposed parallel to the sealing bars or at a predetermined angle of up to 45° to the sealing bars (9).

16. A length of material according to any one of claims 1 to 15, characterised in that the longitudinal threads (10) are disposed at a spacing of 1 mm to 40 mm, preferably 2 mm to 10 mm, and the transverse threads (11) are disposed at a spacing of 0.5 mm to 20 mm, preferably 1 mm to 3 mm.

17. A length of material according to any one of claims 1 to 16, characterised in that the upper and/or lower outer layer comprises a barrier layer of aluminium.

## Revendications

1. Bande de matériau thermo-rétrécissable pour la fabrication de gaines pouvant être rétractées autour d'objets, en particulier des jonctions de câbles et des dérivations de câbles, constituée d'au moins une couche de couverture polymère, une couche réticulée thermiquement stable et une couche de rappel thermo-rétrécissable,
**caractérisée** en ce que la couche de rappel consiste en une bande (4) de matière plastique réticulée, étirée, qui est divisée dans le sens de rétrécissement au moyen d'incisions de division (7) traversant la bande de matière plastique et/ou d'incisions superficielles non traversantes, avec formation de bandes rétrécissables (8) de largeur prédéterminée.

2. Bande de matériau selon la revendication 1, caractérisée en ce que la bande (4) de matière plastique réticulée, étirée, présente à 200°C une force maximale de rétrécissement de 200 p par cm jusqu'à 400 p par cm de la largeur de la bande, de préférence de 1200 p par cm jusqu'à 1600 p par cm de la largeur de la bande.

3. Bande de matériau selon la revendication 1 ou 2, caractérisée en ce que les incisions de division (7) et/ou les incisions superficielles présentent un écartement de 1 mm à 20 mm, de préférence de 1 mm à 5 mm.

4. Bande de matériau selon une des revendications 1 à 3, caractérisée en ce que la bande (4) de matière plastique réticulée, étirée, présente des bords latéraux dépourvus d'incisions, de largeur prédéterminée.

5. Bande de matériau selon une des revendications 1 à 4, caractérisée en ce que la bande (4) de matière plastique réticulée, étirée, est noyée entre deux couches réticulées (3, 6).

6. Bande de matériau selon une des revendications 1 à 4, caractérisée en ce que la bande (4) de matière plastique réticulée, étirée, est noyée entre une couche réticulée (3) et deux couches de couverture (2, 5) ou entre deux couches réticulées (3, 6) et deux couches de couverture (2, 5).

7. Bande de matériau selon une des revendications 1 à 6, caractérisée en ce qu'elle présente des deux côtés des profilés de fermeture (9) ou des bourrelets de fermeture perpendiculaires au sens de rétrécissement.

8. Bande de matériau selon une des revendications 1 à 7, caractérisée en ce que les incisions de division (7) et/ou les incisions superficielles s'étendent perpendiculairement aux profilés de fermeture (9) ou sous un angle prédéterminé allant jusqu'à 45°, de préférence sous un angle de 80° à 85°.

9. Bande de matériau selon une des revendications 1 à 8, caractérisée en ce que les incisions de division (7) et/ou les incisions superficielles s'étendent sous un angle prédéterminé, de préférence un angle de 5° à 20°, les unes par rapport aux autres.

10. Bande de matériau selon une des revendications 1 à 9, caractérisée en ce que les incisions de division (7) et/ou les incisions superficielles se terminent à une distance de 10 mm à 30 mm avant les profilés de fermeture (9) ou sont exécutées jusqu'aux profilés de fermeture (9), le cas échéant se terminent partiellement avant les profilés de fermeture et sont partiellement exécutées jusqu'aux profilés de fermeture (9).

11. Bande de matériau selon une des revendications 1 à 10, caractérisée en ce que la couche réticulée thermiquement stable (3 et/ou 6) est constituée d'un filet, d'un tissu, d'un tissu à mailles ou similaire en métal, en matière plastique ou en verre, et est disposée de manière l'empêchant de coulisser dans le sens de rétrécissement.

12. Bande de matériau selon une des revendications 1 à 11, caractérisée en ce que le filet, le tissu, le tissu à mailles, le grillage ou similaire est constitué de fils retors une fois ou plusieurs fois.

13. Bande de matériau selon une des revendications 1 à 12, caractérisée en ce que le filet, le tissu, le tissu à mailles, le grillage ou similaire présente des filaments d'agent adhésif ou est imbibé d'un agent adhésif liquide.

14. Bande de matériau selon une des revendications 1 à 13, caractérisée en ce que la couche réticulée (3 et/ou 6) est liée par collage et/ou par couture et/ou par remmaillage, de manière résistante à la chaleur, à la bande (4) de matière plastique réticulée, étirée, et, le cas échéant, les fils longitudinaux (10) et les fils transversaux (11) de la couche réticulée (3 et/ou 6) sont reliés entre eux de cette même façon.

15. Bande de matériau selon une des revendications 1 à 14, caractérisée en ce que les fils longitudinaux (10) et les fils transversaux (11) se croisant entre eux sont disposés parallèlement ou perpendiculairement aux profilés de fermeture (9) ou selon un angle prédéterminé allant jusqu'à 45°.

16. Bande de matériau selon une des revendications 1 à 15, caractérisée en ce que les fils longitudinaux (10) sont disposés à un écartement de 1 mm à 40 mm, de préférence de 2 mm à 10 mm, et les fils transversaux (11) sont disposés à un écartement de 0,5 mm à 20 mm, de préférence de 1 mm à 3 mm.

17. Bande de matériau selon une des revendications 1 à 16, caractérisée en ce que la couche de couverture supérieure et/ou la couche de couverture inférieure présente une couche de barrage en aluminium.
